# FASCICULE DE BREVET EUROPEEN

(11) **EP 0 941 006 B1**
(45) Date de publication et mention de la délivrance du brevet: **16.08.2006**
(21) Numéro de dépôt: 99400250.9
(22) Date de dépôt: 04.02.1999
(51) Int. Cl.: H04Q 7/38

(54) **Procédé de sélection de cellule dans un système cellulaire de radiocommunications mobiles**
Zellauswahlverfahren für ein zellulares Mobilfunknetzwerksystem
Cell selection method in a cellular radio mobile network system

(30) Priorité: 06.02.1998 FR 9801442
(43) Date de publication de la demande: 08.09.1999
(73) Titulaire: ALCATEL, 75008 Paris (FR)
(72) Inventeur: Roberts, Michael, 92200 Neuilly sur Seine (FR); Courau, François, 92190 Meudon (FR)
(74) Mandataire: El Manouni, Josiane

(56) Documents cités:
- EP-A- 0 785 696
- EP-A- 0 808 073
- WO-A-97/44922

## Description

La présente invention concerne d'une manière générale les systèmes cellulaires de radiocommunications mobiles, c'est-à-dire les réseaux cellulaires de radiocommunications mobiles et les stations mobiles destinées à être utilisées dans de tels réseaux.

La présente invention concerne plus particulièrement la sélection de cellule lors de l'accès par une station mobile à un tel réseau, pour une communication.

Il est connu de faire réaliser une sélection de cellule, en vue d'un accès au réseau, par la station mobile elle-même, l'algorithme correspondant mis en oeuvre dans la station mobile étant aussi appelé algorithme de sélection de cellule.

Plus précisément, le réseau diffuse dans la cellule serveuse, sur un canal particulier appelé voie balise, des informations nécessaires pour mettre en oeuvre un tel algorithme, ces informations contenant en particulier une liste de cellules voisines à écouter par la station mobile afin de déterminer de laquelle, de ces cellules voisines ou de la cellule serveuse, le niveau de signal reçu sur la voie balise est le plus favorable. La cellule ainsi déterminée constitue, sous réserve que certains autres critères soient satisfaits, la cellule sélectionnée pour l'accès au réseau. En outre, à la mise en service de la station mobile, aucune cellule serveuse n'ayant encore été sélectionnée, la station mobile explore l'ensemble des voies balise, et détermine la cellule serveuse selon les mêmes critères.

Pour une description plus complète des systèmes cellulaires de radiocommunications mobiles tels que notamment le système GSM (pour "Global System for Mobile communications" en anglais), on pourra se référer par exemple au livre de M. MOULY et M.B. PAUTHET, intitulé "The GSM System for Mobile Communications" (Palaiseau, France, 1992, ISBN:2-9507190-07-7).

La présente invention concerne plus particulièrement encore la sélection de cellule lors de l'accès au réseau pour une communication dans un réseau cellulaire de radiocommunications mobiles comportant différents types de cellules dans lesquelles différents types de services sont disponibles.

Un exemple de tel réseau est constitué par un réseau dans lequel sont progressivement introduits, dans une infrastructure existante, correspondant à un système tel qu'un système de deuxième génération (en particulier le système GSM précité), de nouveaux moyens d'accès radio à cette infrastructure, correspondant à un système tel qu'un système de troisième génération (en particulier le système UMTS, pour "Universal Mobile Telecommunication System" en anglais), en vue de l'introduction progressive de nouveaux services, en particulier des services de transmission de données à haut débit.

Un tel système comporte ainsi des cellules ou ressources dans lesquelles lesdits nouveaux services sont disponibles, en l'occurrence des cellules UMTS, ou des cellules GSM/UMTS (c'est-à-dire des cellules ayant une voie balise commune à des moyens d'accès radio de type GSM et à des moyens d'accès radio de type UMTS), et des cellules dans lesquelles lesdits nouveaux services ne sont pas disponibles, en l'occurrence des cellules GSM.

Dans un tel système, la possibilité existe qu'une cellule sélectionnée selon l'algorithme de sélection de cellule rappelé plus haut soit une cellule GSM, alors que le service requis, pour une communication donnée pour laquelle la station mobile accède au réseau, nécessiterait une cellule UMTS ou GSM/UMTS, ou inversement que la cellule sélectionnée soit une cellule UMTS ou GSM/UMTS alors que le service requis se satisferait d'une cellule GSM, de sorte que l'allocation de ressources radio dans un tel réseau n'est dans aucun cas optimisée en fonction des services requis par les utilisateurs.

Un autre exemple de tel réseau est un réseau dans lequel sont introduits, dans une infrastructure existante correspondant à un système donné, par exemple le système GSM, et dans une zone géographique donnée, des moyens d'accès radio supplémentaires, dédiés à un groupe d'utilisateurs particuliers, et permettant à ces utilisateurs de disposer de services supplémentaires dans cette zone géographique.

Dans un tel système, la possibilté existe également qu'une cellule sélectionnée selon l'algorithme de sélection de cellule rappelé plus haut soit une cellule dans laquelle lesdits services supplémentaires ne sont pas disponibles, en particulier dans le cas où un utilisateur autorisé à bénéficier de tels services supplémentaires se trouve en limite de cette zone géographique, auquel cas ni l'utilisateur, ni le fournisseur de ces services, ne sont satisfaits.

Ainsi le problème est généralement posé, dans un système cellulaire de radiocommunications mobiles comportant différents types de cellules dans lesquelles différents types de services sont disponibles, que la cellule sélectionnée pour l'accès au réseau ne correspond pas nécessairement à une meilleure cellule en termes de services.

Il est par ailleurs connu, dans un réseau cellulaire de radiocommunications mobiles tel que notamment le réseau GSM, d'effectuer, en cours de communication, une sélection de cellule pour déterminer une meilleure cellule vers laquelle transférer cette communication, la procédure correspondante étant aussi connue en anglais sous le nom de "handover". Il est en outre connu de faire réaliser une telle sélection de cellule par le réseau, sur la base de résultats de mesure que lui transmet la station mobile. Plus précisément, la cellule sélectionnée est la première d'une liste de cellules dites cellules candidates (classées dans un certain ordre de préférence suivant lesdits résultats de mesure) vers laquelle un transfert s'avère possible, c'est-à-dire notamment dans laquelle des ressources s'avèrent disponibles pour cette communication.

On connaît par ailleurs, dans un réseau cellulaire de radiocommunications mobiles tel que notamment le réseau GSM, le concept dit en anglais de "directed retry", selon lequel un transfert de communication (ou "handover" en anglais), d'une cellule initialement sélectionnée pour l'accès au réseau, vers une meilleure cellule sélectionnée ultérieurement, peut être nécessaire pour tenir compte du fait que la sélection de cellule est réalisée de manière différente dans les deux cas, ainsi qu'il vient d'être rappelé, et de ce fait peut conduire à sélectionner des cellules différentes.

On peut en outre mentionner le document WO97/44922, décrivant un système cellulaire de radiocommunications mobiles comportant différents types de cellules, dans lesquelles sont disponibles différents services de type multimédia, et dans lequel la sélection d'une meilleure cellule vers laquelle transférer une communication en cours est effectuée sur la base de résultats de mesures pour des cellules candidates, de la disponibilité de ressources dans ces cellules candidates, et du type de service requis. Ce document ne traite cependant pas de la sélection de cellule lors de l'accès au réseau pour une communication. En outre, ce document décrit une station mobile équipée de moyens lui permettant de mettre en oeuvre une telle sélection de meilleure cellule vers laquelle transférer une communication en cours. Si une telle sélection de cellule était mise en oeuvre dans la station mobile pour la sélection de cellule lors de l'accès au réseau pour une communication, elle aurait notamment pour inconvénient de nécessiter de nombreux échanges de signalisation entre station mobile et réseau pour sa mise en oeuvre, d'où une consommation importante de ressources radio pour ces échanges, et donc un accroissement du niveau global d'interférence dans le réseau. La présente invention a également pour but d'éviter ces inconvénients.

On peut également mentionner le document EP-A- 0 785 696 concernant un système à architecture multi-couches, dans lequel, pour permettre des communications de bonne qualité correspondant au type d'appel (voix ou données ou image), une sélection de cellule est effectuée non seulement sur la base de la vitesse du mobile, mais également sur la base du type d'appel.

On peut également mentionner le document EP-A- 0 808 073 qui traite du problème de la sélection de système visité (ou « visited system ») de manière à fournir des tarifs les plus avantageux aux utilisateurs.

La présente invention a ainsi notamment pour but de permettre l'accès par une station mobile à un réseau cellulaire de radiocommunications mobiles comportant différents types de cellules dans lesquelles différents types de services sont disponibles, en évitant les divers inconvénients mentionnés dans ce qui précède.

La présente invention a ainsi pour objet un procédé de sélection de cellule lors de l'accès par une station mobile à un réseau cellulaire de radiocommunications mobiles pour une communication, ce procédé étant essentiellement caractérisé en ce que, ledit réseau comportant différents types de cellules dans lesquelles différents types de services sont disponibles, il comporte les étapes suivantes:
- sélection de cellule par ladite station mobile, en vue de l'accès au réseau,
- accès au réseau dans la cellule ainsi sélectionnée, correspondant à un type donné de cellule,
- en fonction du type de service requis pour ladite communication, décision de transfert ou non de cette communication vers une cellule d'un autre type, constituant une meilleure cellule en termes de services.

En d'autres termes, et par référence au concept dit en anglais de "directed retry", l'invention peut être considérée comme introduisant un nouveau cas d'application d'un tel concept, selon lequel est effectué un transfert de communication (ou "handover" en anglais) d'une cellule sélectionnée initialement pour l'accès au réseau, vers une autre cellule, constituant une meilleure cellule en termes de service.

Un autre objet de la présente invention consiste dans un réseau cellulaire de radiocommunications mobiles, un centre de commutation et un contrôleur de stations de base permettant de mettre en oeuvre un tel procédé (la présente invention ne nécessitant avantageusement pas de modification des stations mobiles pour permettre sa mise en oeuvre).

D'autres objets et caractéristiques de la présente invention apparaîtront à la lecture de la description suivante d'un exemple de réalisation, faite en relation avec les dessins ci-annexés, dans lesquels:
- la figure 1 est un diagramme destiné à illustrer un exemple de système auquel la présente invention est applicable,
- la figure 2 est un diagramme destiné à illustrer les différentes étapes d'un exemple de procédé suivant l'invention,
- les figures 3 et 4 sont des diagrammes destinés à illustrer un exemple de moyens à prévoir dans un réseau auquel la présente invention est applicable, pour permettre d'utiliser le procédé suivant l'invention.

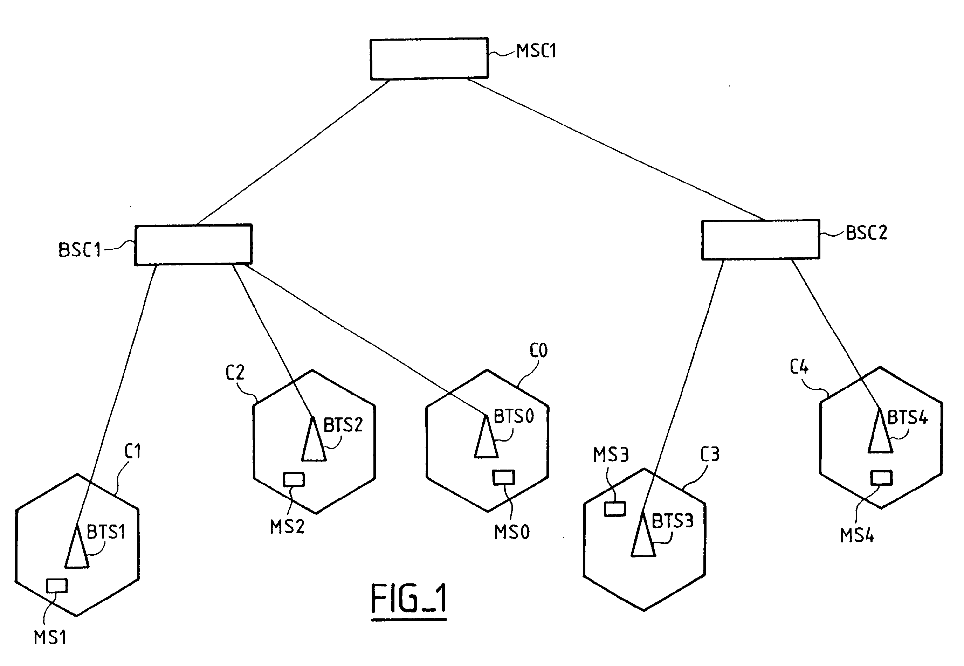

Un système cellulaire de radiocommunications mobiles comporte essentiellement, comme illustré sur la figure 1:
- un ensemble de stations de base (ou BTS, pour "Base Transceiver Station" en anglais), telles que celles notées BTS0, BTS1, BTS2, BTS3 et BTS4, chacune de ces stations de base étant, dans l'exemple illustré, affectée à une cellule (notée respectivement C0, C1, C2, C3, et C4), et ces stations de base étant en relation, via une interface radio, avec des stations mobiles, telles que MS0, MS1, MS2, MS3, MS4,
- un ensemble de contrôleurs de stations de base (ou BSC, pour "Base Station Controller" en anglais), tels que ceux notés BSC1 et BSC2, chacun de ces BSC contrôlant, du point de vue de la gestion des ressources radio, un sous-ensemble de cellules, le contrôleur de stations de base BSC1 contrôlant dans l'exemple illustré les cellules C0, C1 et C2, et le contrôleur de stations de base BSC2 contrôlant dans cet exemple les cellules C3 et C4,
- un ensemble de centres de commutation mobile, appelés aussi MSC (pour "Mobile Switching Center" en anglais), dont un seul, noté MSC1, est illustré sur la figure, chacun de ces MSC étant, d'une manière non illustrée spécifiquement, en relation avec des réseaux extérieurs tels que notamment les réseaux PSTN (pour "Public Switched Telephone Network") ou ISDN (pour "Integrated Services Digital Network"), et contrôlant, du point de vue de la gestion des communications, un sous-ensemble de contrôleurs de stations de base, le centre de commutation mobile MSC1 contrôlant dans l'exemple illustré les contrôleurs de stations de base BSC1 et BSC2.

L'ensemble formé par les BTS et BSC, aussi appelé BSS (pour "Base Station Subsystem" en anglais), constitue ce qui a été appelé plus haut des moyens d'accès radio au réseau.

A titre d'exemple auquel la présente invention est applicable, les moyens d'accès radio formés des éléments BTS3, BTS4 et BSC2 constituent de nouveaux moyens d'accès radio, correspondant au système UMTS, introduits dans une infrastructure existante correspondant au système GSM et comprenant déjà ses propres moyens d'accès radio, formés des éléments BTS0, BTS1, BTS2 et BSC1. Des cellules telles que C0, C1 et C2 constituent alors un premier type de cellules, correspondant à des cellules GSM, et des cellules telles que C3 et C4 constituent un deuxième type de cellules, correspondant à des cellules UMTS ou GSM/UMTS. Les stations mobiles considérées sont par ailleurs des stations mobiles bi-mode aptes à communiquer sur l'une ou l'autre des interfaces radio correspondant à ces différents moyens d'accès radio.

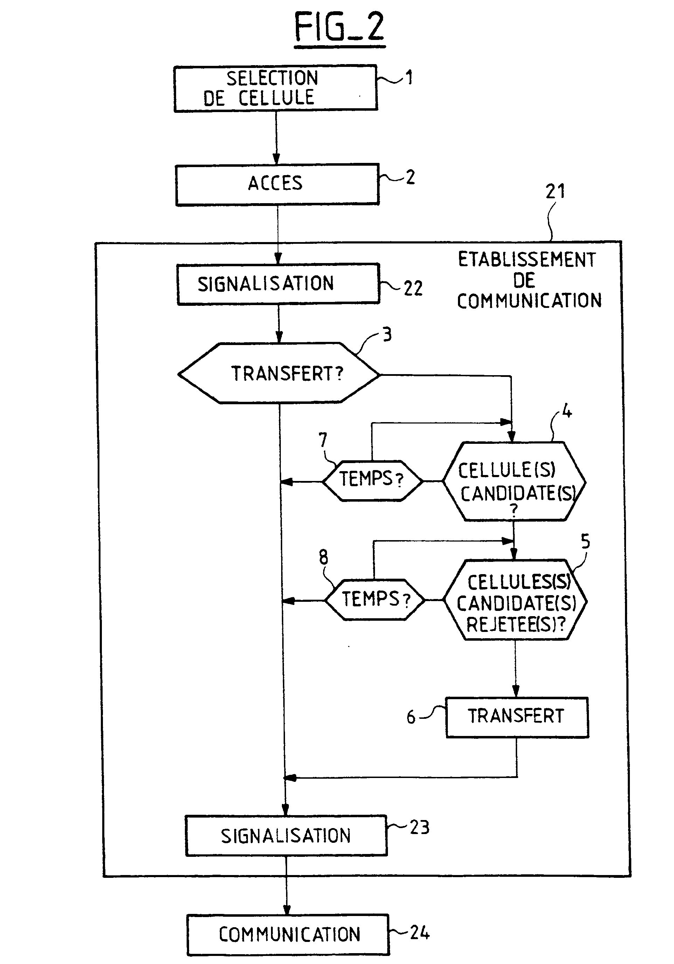

La figure 2 illustre les différentes étapes d'un exemple de procédé suivant la présente invention.

Les étapes suivantes sont illustrées sur la figure 2:
- sélection de cellule par une station mobile en vue de l'accès au réseau, par exemple suivant l'algorithme de sélection de cellule rappelé plus haut (étape 1, notée "Sélection de cellule"),
- accès au réseau, pour une communication donnée, dans la cellule ainsi sélectionnée, correspondant à un type donné de cellule (étape 2, notée "Accès"),
- phase d'établissement de communication (étape 21, notée "Etablissement de communication"), comprenant à son tour, outre des étapes d'échange de signalisation nécessaires à cet établissement de communication (telles que les étapes 22 et 23 notées "Signalisation"), une étape de décision de transfert ou non de cette communication vers une cellule d'un autre type, constituant une meilleure cellule en termes de service (étape 3 notée "Transfert?"),
- phase de communication dans la cellule ainsi sélectionnée (étape 24, notée "Communication"), ou du moins début de cette phase de communication, un ou plusieurs transferts pouvant en effet être effectués par la suite, au cours de cette communication.

Dans le cas où un transfert n'est pas décidé dans l'étape 3, la cellule ainsi sélectionnée reste celle sélectionnée initialement pour l'accès au réseau.

Dans le cas où un transfert est décidé dans l'étape 3, les étapes suivantes sont réalisées, pour déterminer vers laquelle des cellules dudit autre type la communication est à transférer, ces étapes pouvant être similaires à celles habituellement mises en oeuvre pour sélectionner une meilleure cellule vers laquelle transférer une communication en cours, à ceci près qu'elles ne s'appliquent pas ici à des cellules de n'importe quel type, mais à des cellules dudit autre type:
- une étape selon laquelle il est déterminé si des cellules candidates dudit autre type peuvent être déterminées (étape 4, notée "Cellule(s) candidate(s)?")
- une étape selon laquelle il est déterminé si un transfert vers l'une ou l'autre de ces cellules candidates, considérées dans un certain ordre de préférence, est possible, c'est-à-dire s'il ne s'agit pas d'une cellule rejetée (étape 5 notée "Cellule(s) candidate(s) rejetée(s)?").

Dans le cas où une telle cellule candidate non rejetée est déterminée, un transfert vers cette cellule est commandé (étape 6 notée "Transfert").

Dans le cas où une telle cellule candidate, ou une telle cellule candidate non rejetée, ne peut pas être trouvée, un transfert peut être tenté ultérieurement, de préférence à l'intérieur de certaines limites de temps (étapes 7 et 8 notées "Temps?"). Si aucun transfert vers une meilleure cellule en termes de service n'est définitivement possible, la communication est laissée dans la cellule sélectionnée initialement pour l'accès au réseau. Le réseau peut alors fournir, par exemple dans le cas considéré ici d'un réseau mixte GSM/UMTS, un service de moindre qualité, notamment un service de transmission de données à plus faible débit, ou tout autre service en remplacement, jusqu'à ce qu'un prochain transfert vers une meilleure cellule en termes de service s'avère possible, au gré des déplacements de l'utilisateur et des changements de conditions radio et de trafic à l'intérieur du réseau au cours de cette communication.

Il est à noter que selon un autre exemple les cellules déterminées comme étant des cellules candidates pourraient être des cellules de n'importe quel type, et les cellules candidates vers lesquelles un transfert est tenté, seulement des cellules dudit autre type.

Dans l'exemple illustré sur la figure 1, si les cellules C0, C1 et C2 sont des cellules GSM, l'accès au réseau par une station mobile telle que MS0 par exemple, pour une communication correspondant par exemple à un service de transmission de données à haut débit disponible dans une cellule UMTS ou GSM/UMTS telle que les cellules C3 et C4 par exemple, peut être effectué de la manière suivante:
- sélection d'une cellule GSM, par exemple la cellule C0, par la station mobile MS0,
- accès au réseau dans la cellule C0 ainsi sélectionnée,
- en fonction de données de signalisation transmises par la station mobile lors de la phase d'établissement de la communication, décision de transfert vers une cellule UMTS ou GSM/UMTS; dans l'exemple illustré, il pourra s'agir par exemple de la cellule C3.

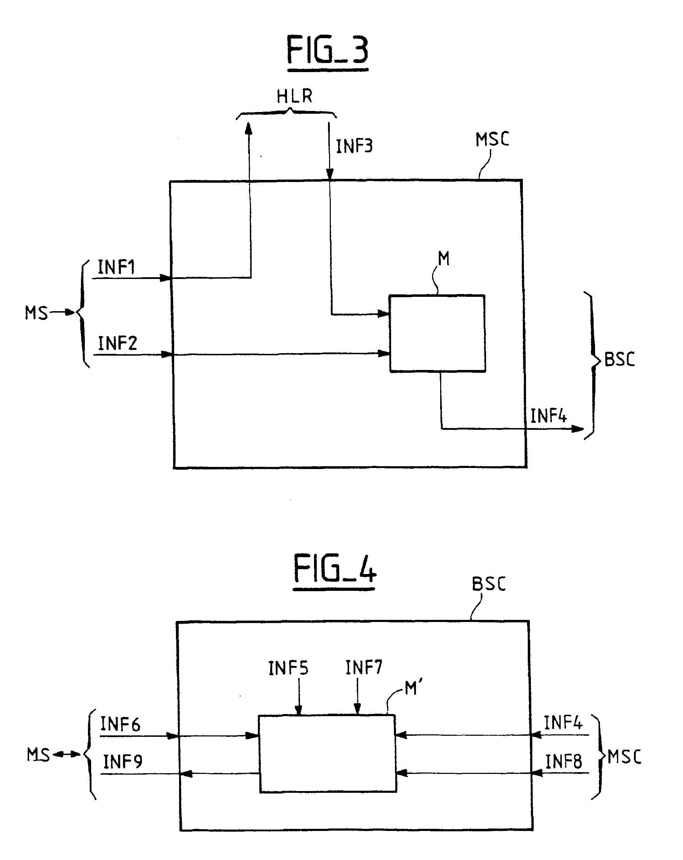

Les figures 3 et 4 sont des diagrammes destinés à illustrer un exemple de moyens à prévoir dans le réseau, respectivement dans les entités MSC et BSC, pour utiliser un procédé suivant l'invention.

Comme illustré sur la figure 3, un MSC reçoit d'une station mobile MS, lors de l'accès au réseau et de la phase d'établissement d'une communication:
- des informations INF1 permettant d'identifier l'utilisateur,
- des informations INF2 permettant d'identifier le type de service requis pour la communication considérée.

Un MSC reçoit en outre, d'une base de données telle que notamment la base de données HLR (pour "Home Location Register" en anglais), en réponse aux informations INF1, des informations INF3 permettant d'identifier les services que l'utilisateur est autorisé à utiliser, et éventuellement les restrictions géographiques pour une telle utilisation.

Le MSC illustré sur la figure 3 comporte en outre des moyens notés M pour déterminer, à partir des informations INF2 et INF3, des informations INF4 indiquant le type de cellule constituant une meilleure cellule en termes de service, pour cet utilisateur et cette communication.

A titre d'exemple, dans le cas considéré ici d'un réseau mixte GSM/UMTS, et comme déjà indiqué plus haut, une telle meilleure cellule en termes de services pourra, dans le cas où le service requis est un service de transmission de données à haut débit disponible seulement dans une cellule UMTS ou GSM/UMTS, être une telle cellule UMTS ou GSM/UMTS, ou, dans le cas contraire, être une cellule GSM.

Comme illustré sur la figure 4 des moyens notés M' sont prévus dans l'entité BSC, pour :
- d'une part décider si un transfert doit ou non être effectué vers une meilleure cellule en termes de service, cette décision étant prise sur la base:
   -- du type de cellule sélectionné pour l'accès au réseau, représenté par une information INF5 qui peut être fournie par le BSC considéré (c'est-à-dire le BSC contrôlant la cellule serveuse actuelle, c'est-à-dire en l'occurrence la cellule sélectionnée pour l'accès au réseau),
   -- du type de cellule constituant une meilleure cellule en termes de service, représenté par les informations INF4,
- d'autre part, dans le cas où il est décidé qu'un tel transfert doit effectivement être effectué, sélectionner celle de ces cellules vers laquelle ce transfert est à effectuer, cette sélection étant faite sur la base:
   -- d'informations telles que INF6 correspondant à des résultats de mesures fournis par la station mobile MS,
   -- d'informations sur la disponibilité de ressources dans les cellules candidates considérées, telles que les informations INF7 fournies par des moyens de gestion de ressources radio à l'intérieur du BSC considéré (dans le cas de transfert dit interne, ou intra-BSC), ou telles que les informations INF8 fournies par le MSC qui contrôle ce BSC (dans le cas de transfert dit externe, ou inter-BSC),
- d'informations relatives au type de cellule constituant une meilleure cellule en termes de service, telles que les informations INF4 .

Les moyens M' opèrent essentiellement suivant le procédé décrit précédemment, pour, à partir d'informations telles que INF4 à INF8, déterminer si un transfert vers une meilleure cellule en termes de service est à effectuer, et si oui sélectionner celle de ces cellules vers laquelle ce transfert est à effectuer, la cellule ainsi sélectionnée étant indiquée par des informations telles que INF9 transmises vers la station mobile MS.

La réalisation particulière des moyens M et M', de manière à faire fonctionner l'ensemble selon le procédé ainsi décrit, ne présentant pas de difficulté particulière pour l'homme du métier, ne nécessite pas de description spécifique. En outre, la répartition des différentes fonctions entre les entités MSC et BSC peut être autre que celle envisagée ci-dessus à titre d'exemple.

En outre, la transmission des informations telles que INF1 à INF9, à l'intérieur du réseau, peut être réalisée selon les protocoles connus de communication à l'intérieur d'un tel réseau, qui ne nécessitent pas d'être redécrits ici.

L'exemple ainsi décrit permet notamment une optimisation de l'allocation des ressources radio à l'intérieur du réseau, en fonction des services requis par les utilisateurs.

L'invention n'est pas limitée, dans cet exemple d'application, au cas où la cellule sélectionnée initialement, pour l'accès au réseau, est une cellule GSM et où un transfert est ensuite effectué vers une cellule UMTS ou GSM/UMTS. Elle peut aussi être utilisée dans le cas où la cellule sélectionnée initialement, pour l'accès au réseau, est une cellule UMTS ou GSM/UMTS et où un transfert est ensuite effectué vers une cellule GSM (si cela est permis pour le service requis), permettant ainsi d'optimiser encore l'allocation de ressources radio à l'intérieur du réseau.

En outre, comme déjà indiqué, l'invention n'est pas limitée à l'exemple d'application décrit correspondant à un réseau mixte GSM/UMTS.

## Revendications

1. Procédé de sélection de cellule lors de l'accès par une station mobile (MS0, MS1, MS2, MS3, MS4) à un réseau cellulaire de radiocommunications mobiles pour une communication, ce procédé étant **caractérisé en ce que**, ledit réseau comportant différents types de cellules (C0, C1, C2, C3, C4) dans lesquelles différents types de services sont disponibles, correspondant à différents moyens d'accès radio (BTS0-BSC1, BTS1-BSC1, BTS2-BSC1, BTS3-BSC2, BTS4-BSC2) il comporte les étapes suivantes:
- sélection de cellule par ladite station mobile, en vue de l'accès au réseau (1),
- accès au réseau dans la cellule ainsi sélectionnée, correspondant à un type donné de cellule (2),
- en fonction du type de service requis pour ladite communication, décision de transfert ou non de cette communication vers une cellule d'un autre type, constituant une meilleure cellule en termes de services (3).

2. Procédé selon la revendication 1, dans lequel différents moyens d'accès radio comportent des moyens d'accès radio correspondant à un système de deuxième génération et des moyens d'accès radio correspondant à un système de troisième génération.

3. Procédé selon la revendication 2, dans lequel différents moyens d'accès radio comportent des moyens d'accès radio correspondant au système GSM (« Global System for Mobile communications »)et des moyens d'accès radio correspondant au système UMTS (« Universal Mobile Telecommunications System»).

4. Procédé selon la revendication 3, dans lequel la cellule sélectionnée initialement pour l'accès au réseau est une cellule GSM, et un tranfert est ensuite effectué vers une cellule UMTS.

5. Procédé selon la revendication 3, dans lequel la cellule sélectionnée initialement pour l'accès au réseau est une cellule UMTS, et un tranfert est ensuite effectué vers une cellule GSM.

6. Réseau cellulaire de radiocommunications mobiles, comportant différents types de cellules (C0, C1, C2, C3, C4) dans lesquelles différents types de services sont disponibles, correspondant à différents moyens d'accès radio (BTS0-BSC1, BTS1-BSC1, BTS2-BSC1, BTS3-BSC2, BTS4-BSC2), **caractérisé en ce qu'**il comporte, pour la sélection de cellule lors de l'accès à ce réseau par une station mobile (MS0 MS1, MS2, MS3, MS4), en vue d'établir une communication:
- des moyens (M) pour déterminer, en fonction du type de service requis pour ladite communication, le type de cellule constituant une meilleure cellule, en termes de service,
- des moyens (M') pour décider si un transfert de cette communication doit ou non être effectué, d'une cellule initialement sélectionnée pour l'accès au réseau, vers une cellule d'un autre type constituant une telle meilleure cellule en termes de service.

7. Réseau selon la revendication 6, dans lequel différents moyens d'accès radio comportent des moyens d'accès radio correspondant à un système de deuxième génération et des moyens d'accès radio correspondant à un système de troisième génération.

8. Réseau selon la revendication 6, dans lequel différents moyens d'accès radio comportent des moyens d'accès radio correspondant au système GSM (« Global System for Mobile communications »)et des moyens d'accès radio correspondant au système UMTS (« Universal Mobile Telecommunications System»).

9. Réseau selon la revendication 8, dans lequel la cellule sélectionnée initialement pour l'accès au réseau est une cellule GSM, et un tranfert est ensuite effectué vers une cellule UMTS.

10. Réseau selon la revendication 8, dans lequel la cellule sélectionnée initialement pour l'accès au réseau est une cellule UMTS, et un tranfert est ensuite effectué vers une cellule GSM.

11. Centre de commutation mobile (MSC),pour réseau cellulaire de radiocommunications mobiles comportant différents types de cellules (C0, C1, C2, C3, C4) dans lesquelles différents types de services sont disponibles, correspondant à différents moyens d'accès radio (BTS0-BSC1, BTS1-BSC1, BTS2-BSC1, BTS3-BSC2, BTS4-BSC2),**caractérisé en ce qu'**il comporte, pour la sélection de cellule lors de l'accès à ce réseau par une station mobile (MS0, MS1, MS2, MS3, MS4), en vue d'établir une communication:
- des moyens (M) pour déterminer, en fonction du type de service requis pour ladite communication, le type de cellule constituant une meilleure cellule, en termes de service.

12. Centre de commutation mobile selon la revendication 11, dans lequel différents moyens d'accès radio comportent des moyens d'accès radio correspondant à un système de deuxième génération et des moyens d'accès radio correspondant à un système de troisième génération.

13. Centre de commutation mobile selon la revendication 11, dans lequel différents moyens d'accès radio comportent des moyens d'accès radio correspondant au système GSM (« Global System for Mobile communications »)et des moyens d'accès radio correspondant au système UMTS (« Universal Mobile Telecommunications System»).

14. Contrôleur de stations de base (BSC), pour réseau cellulaire de radiocommunications mobiles comportant différents types de cellules (C0, C1, C2, C3, C4)dans lesquelles différents types de services sont disponibles, correspondant à différents moyens d'accès radio (BTS0-BSC1, BTS1-BSC1, BTS2-BSC1, BTS3-BSC2, BTS4-BSC2), **caractérisé en ce qu'**il comporte, pour la sélection de cellule lors de l'accès à ce réseau par une station mobile (MS0, MS1, MS2, MS3, MS4), en vue d'établir une communication:
- des moyens (M') pour décider si un transfert de cette communication doit ou non être effectué, d'une cellule initialement sélectionnée pour l'accès au réseau, vers une cellule d'un autre type constituant une meilleure cellule en termes de service.

15. Contrôleur de stations de base (BSC) selon la revendication 14, dans lequel différents moyens d'accès radio comportent des moyens d'accès radio correspondant à un système de deuxième génération et des moyens d'accès radio correspondant à un système de troisième génération.

16. Contrôleur de stations de base (BSC) selon la revendication 14, dans lequel différents moyens d'accès radio comportent des moyens d'accès radio correspondant au système GSM (« Global System for Mobile communications »)et des moyens d'accès radio correspondant au système UMTS (« Universal Mobile Télécommunications System»).

17. Contrôleur de stations de base (BSC) selon la revendication 16, dans lequel la cellule sélectionnée initialement pour l'accès au réseau est une cellule GSM, et un tranfert est ensuite effectué vers une cellule UMTS.

18. Contrôleur de stations de base (BSC)selon la revendication 16, dans lequel la cellule sélectionnée initialement pour l'accès au réseau est une cellule UMTS, et un tranfert est ensuite effectué vers une cellule GSM.

## Claims

1. A method of selecting a cell when a mobile station (MS0, MS1, MS2, MS3, MS4) accesses a cellular mobile radio network to make a call, **characterized in that** for said network heading different types of cells (C0, C1, C2, C3, C4) in which different types of services are available corresponding to different radio access means (BTS0-BSC1, BTS1-BSC1, BTS2-BSC1, BTS3-BSC2, BTS4-BSC2), said method comprises the following steps:
· selection by said mobile station of a cell to access the network (1),
· access to the network in the cell so selected, corresponding to a given type of cell (2), and
· deciding whether or not to hand over said call to a cell of another type constituting a better cell in terms of services (3), depending on the type of service required for said call.

2. A method according to claim 1, in which different radio access means comprise radio access means corresponding to a second generation system and radio access means corresponding to a third generation system.

3. A method according to claim 2, in which different radio access means comprise radio access means corresponding to the GSM system ("global system for mobile communications") and radio access means corresponding to the UMTS system ("universal mobile telecommunications system").

4. A method according to claim 3, in which the cell initially selected for accessing the network is a GSM cell, and a handover is subsequently performed to a UMTS cell.

5. A method according to claim 3, in which the cell selected initially for access to the network is a UMTS cell, and a handover is subsequently performed to a GSM cell.

6. A cellular mobile radio network including different types of cells (C0, C1, C2, C3, C4) in which different types of services are available corresponding to different radio access means (BTS0-BSC1, BTS1-BSC1, BTS2-BSC1, BTS3-BSC2, BTS4-BSC2), said network being **characterized in that** it comprises, for selecting a cell when a mobile station (MS0, MS1, MS2, MS3, MS4) accesses the network to set up a call:
· means (M) for determining the type of cell constituting a better cell in terms of service according to the type of service required for said call, and
· means (M') for deciding if said call is to be handed over or not from a cell initially selected for access to the network to a cell of another type constituting a better cell in terms of service.

7. A network according to claim 6, in which different radio access means comprise radio access means corresponding to a second generation system and radio access means corresponding to a third generation system.

8. A network according to claim 6, in which different radio access means comprise radio access means corresponding to the GSM system ("global system for mobile communications") and radio access means corresponding to the UMTS system ("universal mobile telecommunications system").

9. A network according to claim 8, in which the cell initially selected for accessing the network is a GSM cell, and a handover is subsequently performed to a UMTS cell.

10. A network according to claim 8, in which the cell selected initially for access to the network is a UMTS cell, and a handover is subsequently performed to a GSM cell.

11. A mobile switching center (MSC) for a cellular mobile radio network including different types of cells (C0, C1, C2, C3, C4) in which different types of services are available corresponding to different radio access means (BTS0-BSC1, BTS1-BSC1, BTS2-BSC1, BTS3-BSC2, BTS4-BSC2), said mobile switching center being **characterized in that** it comprises, for selecting a cell when a mobile station (MS0, MS1, MS2, MS3, MS4) accesses the network to set up a call:
· means (M) for determining the type of cell constituting a better cell in terms of service according to the type of service required for said call.

12. A mobile switching center according to claim 11, in which different radio access means comprise radio access means corresponding to a second generation system and radio access means corresponding to a third generation system.

13. A mobile switching center according to claim 11, in which different radio access means comprise radio access means corresponding to the GSM system ("global system for mobile communications") and radio access means corresponding to the UMTS system ("universal mobile telecommunications system").

14. A base station controller (BSC) for a cellular mobile radio network including different types of cells (C0, C1, C2, C3, C4) in which different types of services are available corresponding to different radio access means (BTS0-BSC1, BTS1-BSC1, BTS2-BSC1, BTS3-BSC2, BTS4-BSC2), said base station controller being **characterized in that** it comprises, for selecting a cell when a mobile station (MS0, MS1, MS2, MS3, MS4) accesses the network to set up a call:
means (M') for deciding if said call is to be handed over or not from a cell initially selected for access to the network to a cell of another type constituting a better cell in terms of service.

15. A base station controller (BSC) according to claim 14, in which different radio access means comprise radio access means corresponding to a second generation system and radio access means corresponding to a third generation system.

16. A base station controller (BSC) according to claim 14, in which different radio access means compose radio access means corresponding to the GSM system ("global system for mobile communications") and radio access means corresponding to the UMTS system ("universal mobile telecommunications system").

17. A base station controller (BSC) according to claim 16, in which the cell initially selected for accessing the network is a GSM cell, and a handover is subsequently performed to a UMTS cell.

18. A base station controller (BSC) according to claim 16, in which the cell selected initially for access to the network is a UMTS cell, and a handover is subsequently performed to a GSM cell.

## Patentansprüche

1. Zellauswahlverfahren beim Zugriff einer Mobilstation (MS0, MS1, MS2, MS3, MS4) auf ein zellulares Mobilfunknetzwerk für eine Verbindung, wobei dieses Verfahren **dadurch gekennzeichnet ist**, wobei das genannte Netzwerk unterschiedliche Zellentypen (C0, C1, C2, C3, C4) umfasst, in denen verschiedene Dienstearten verfügbar sind, die unterschiedlichen Vorrichtungen für den Funkzugriff (BTS0-BSC1, BTS1-BSC1, BTS2-BSC1, BTS3-BSC2, BTS4-BSC2) entsprechen, dass es folgende Schritten umfasst:
- Zellauswahl durch die genannte Mobilstation im Hinblick auf den Netzwerkzugriff (1),
- Zugriff auf das Netz über die auf diese Weise ausgewählte Zelle, die einem gegebenen Zellentyp entspricht (2),
- Entscheidung, in Abhängigkeit von der für die genannte Verbindung erforderlichen Diensteart, ob eine Übergabe dieser Verbindung an eine Zelle anderen Typs erfolgen soll, die im Hinblick auf die Dienste eine besser geeignete Zelle darstellt (3).

2. Verfahren gemäß Anspruch, 1, in dem verschiedene Vorrichtungen für den Funkzugriff sowohl Vorrichtungen für den Funkzugriff, die einem System der zweiten Generation entsprechen, als auch Vorrichtungen für den Funkzugriff umfassen, die einem System der dritten Generation entsprechen.

3. Verfahren gemäß Anspruch 2, in dem verschiedene Vorrichtungen für den Funkzugriff sowohl Vorrichtungen für den Funkzugriff, die dem GSM-System ("Global System for Mobile Communications") entsprechen, als auch Vorrichtungen für den Funkzugriff umfassen, die dem UMTS-System ("Universal Mobile Telecommunications System") entsprechen.

4. Verfahren gemäß Anspruch 3, in dem es sich bei der ursprünglich für den Netzwerkzugriff ausgewählten Zelle um eine GSM-Zelle handelt und anschließend eine Übergabe an eine UMTS-Zelle erfolgt.

5. Verfahren gemäß Anspruch 3, in dem es sich bei der ursprünglich für den Netzwerkzugriff ausgewählten Zelle um eine UMTS-Zelle handelt und anschließend eine Übergabe an eine GSM-Zelle erfolgt.

6. Zellulares Mobilfunknetzwerk, das unterschiedliche Zellentypen (C0, C1, C2, C3, C4) beinhaltet, in denen verschiedene Dienstearten verfügbar sind, die verschiedenen Vorrichtungen für den Funkzugriff (BTS0-BSC1, BTS1-BSC1, BTS2-BSC1, BTS3,-BSC2, BTS4-BSC2) entsprechen, **dadurch gekennzeichnet, dass** es zur Auswahl der Zelle beim Netzwerkzugriff über eine Mobilstation (MS0, MS1, MS2, MS3, MS4) im Hinblick auf die Erstellung einer Verbindung Folgendes beinhaltet:
- Vorrichtungen (M) zur Ermittlung des Zellentyps, in Abhängigkeit von der für die genannte Verbindung erforderlichen Diensteart, die im Hinblick auf den Dienst die am besten geeignete Zelle darstellt,
- Vorrichtungen (M') zur Ermittlung, ob eine Übergabe dieser Verbindung von der für den Netzwerkzugriff ursprünglich ausgewählten Zelle an eins Zelle anderen Typs, die eine im Hinblick auf den Dienst besser geeignete Zelle darstellt, erfolgen soll.

7. Netzwerk gemäß Anspruch 6, in dem unterschiedliche Vorrichtungen für den Funkzugriff sowohl Vorrichtungen für den Funkzugriff, die einem System der zweiten Generation entsprechen, als auch Vorrichtungen für den Funkzugriff umfassen, die einem System der dritten Generation entsprechen.

8. Netzwerk gemäß Anspruch 6, in dem unterschiedliche Vorrichtungen für den Funkzugriff sowohl Vorrichtungen für den Funkzugriff, die dem GSM-System ("Global System for Mobile Communication") entsprechen, als auch Vorrichtungen für den Funkzugriff umfassen, die dem UMTS-System ("Universal Mobile Telecommunications System") entsprechen.

9. Netzwerk gemäß Anspruch 8, in dem es sich bei der ursprünglich für den Netzwerkzugriff ausgewählten Zelle um eine GSM-Zelle handelt und anschließend eine Übergabe an eine UMTS-Zelle erfolgt.

10. Netzwerk gemäß Anspruch 8, in dem es sich bei der ursprünglich für den Netzwerkzugriff ausgewählten Zelle um eine UMTS-Zelle handelt und anschließend eine Übergabe an eine GSM-Zelle erfolgt.

11. Mobilfunkvermittlungsstelle (MSC) für ein zellulares Mobilfunknetzwerk, das unterschiedliche Zellentypen (C0, C1, C2, C3, C4) umfasst, in denen verschiedene Dienstearten verfügbar sind, die verschiedenen Vorrichtungen für den Funkzugriff (BTS0-BSC1, BTS1-BSC1, BTS2-BSC1, BTS3-BSC2, BTS4--BSC2) entsprechen, **dadurch gekennzeichnet, dass** es zur Zellauswahl beim Netzwerkzugriff über eine Mobilstation- (MS0, MS1, MS2, MS3, MS4) im Hinblick auf die Herstellung einer Verbindung Folgendes umfasst :
- Vorrichtungen (M) zur Ermittlung des Zellentyps, in Abhängigkeit von der für die genannte Verbindung erforderlichen Diensteart, die im Hinblick auf den Dienst eine besser geeignete Zelle darstellt.

12. Mobilfunkvermittlungsstelle gemäß Anspruch 11, in der unterschiedliche Vorrichtungen für den Funkzugriff sowohl Vorrichtungen für den Funkzugriff, die einem System der zweiten Generation entsprechen, als auch Vorrichtungen für den Funkzugriff umfassen, die einem System der dritten Generation entsprechen.

13. Mobilfunkvermittlungstelle gemäß Anspruch 11, in der unterschiedliche Vorrichtungen für den Funkzugriff sowohl Vorrichtungen, für den Funkzugriff, die einem GSM-System ("Global System for Mobile Communications") entsprechen, als auch Vorrichtungen für den Funkzugriff umfassen, die einem. UMTS-System ("Universal Mobile Telecommunications System'") entsprechen.

14. Basisstationscontroller (BSC) für ein zellulares Mobilfunknetzwerk, das unterschiedliche Zellentypen (C0, C1, C2, C3, C4) umfasst, in denen verschiedene Dienstearten verfügbar sind, die unterschiedlichen Vorrichtungen für den Funkzugriff (BTS0-BSC1, BTS1-BSC1, BTS2-BSC1, BTS3-BSC2, BTS4-BSC2) entsprechen, **dadurch gekennzeichnet, dass** es zur zellauswahl beim Netxwerkzugriff durch eine Mobilstation (MS0, MS1, MS2, MS3, MS4) im Hinblick auf die Herstellung einer Verbindung Folgendes umfasst :
- Vorrichtungen (M') zur Ermittlung, ob eine Übergabe dieser Verbindung von der für den Netzwerkzugriffursprünglich ausgewählten Zelle an eine Zelle anderen Typs, die eine im Hinblick auf den Dienst besser geeignete Zelle darstellt, erfolgen soll.

15. Basisstationscontroller (BSC) gemäß Anspruch 14, in dem unterschiedliche Vorrichtungen für den Funkzugriff sowohl Vorrichtungen für den Funkzugriff, die einem System der zweiten Generation entsprechen, als auch Vorrichtungen für den Funkzugriff umfassen, die einem System der dritten Generation entsprechen.

16. Basisstationscontroller (BSC) gemäß Anspruch 14, in dem unterschiedliche Vorrichtungen für den Funkzugriff sowohl Vorrichtungen für den Funkzugriff, die einem GSM-System ("Global System for Mobile Communication") entsprechen, als auch Vorrichtungen für den Funkzugriff umfassen, die einem UMTS-System ("Universal Mobile Telecommunications System") entsprechen.

17. Basisstationscontroller (BSC) gemäß Anspruch 16, in dem es sich bei der ursprünglich für den Netzwerkzugriff ausgewählten Zelle um eine GSM-Zelle handelt und anschließend eine Übergabe an eine UMTS-Zelle erfolgt.

18. Basisstationscontroller (BSC) gemäß Anspruch 16, in dem es sich bei der ursprünglich für den Netzwerkzugriff ausgewählten Zelle um eine UMTS-Zelle handelt und anschließend eine Übergabe an eine GSM-Zelle erfolgt.
